# EUROPEAN PATENT APPLICATION

(11) **EP 3 216 773 A1**
(43) Date of publication of application: **13.09.2017**
(21) Application number: 16160009.3
(22) Date of filing: 11.03.2016
(51) Int. Cl.: C04B 41/00

(54) **A METHOD FOR MANUFACTURING A LAMINATED TILE, A PRODUCT OBTAINED WITH SAID METHOD AND USE OF A PRIMER**

(71) Applicant: MBI Group B.V., 5466 AE Veghel (NL)
(72) Inventor: BETTONVIL, Marcelis Martinus Johannes, 5466 AE Veghel (NL); MOLLINK, Wilhelmus Antonius Gerardes, 5466 AE Veghel (NL)
(74) Representative: Plaggenborg, Menko Bernard

(57) **Abstract**

The present invention relates to a method for manufacturing a laminated tile comprising a mutually connected solid tile body and concrete body, said method comprising the steps of: a) applying a primer to a first surface of said solid tile body, wherein said primer comprises monomers that form part of a water polymerizable polymerization system, b) applying a concrete mixture on top of said tile's first surface, c) hardening said concrete mixture and said primer at least partially for obtaining a green laminated product, and d) optionally fully hardening said concrete and said primer for obtaining said laminated tile if said full hardening was not obtained in step c).

The invention also relates to a laminated tile, comprising a mutually connected solid tile body and a concrete body, said solid tile body and concrete body being connected through an adhesive, said adhesive being the polymerization product of monomers that form part of a water polymerizable polymerization system.

## Description

The present invention relates to a method for manufacturing a laminated tile comprising mutually connected solid tile body and concrete body according to claim 1. The invention also relates to such laminated tile obtained with said method, in accordance with claim 13. The laminated tile according to the present invention is mainly used in outdoor applications, such as for garden and terrace. The invention also relates to the use of a primer in the method for laminating a tile body and a concrete mixture according to claim 18.

To a limited extent, the application of laminated tiles in outdoor applications is known in the art. Theoretically, laminated tiles as indicated above have excellent properties, because of a combination of highly attractive appearance due to a solid tile body at a visible side of the laminated tile and high strength due to the concrete body at the non-visible side. For example, laminated tiles may be comprised of a concrete body and a solid tile body chosen from ceramics, natural stone, metal such as zinc, aluminum, stainless steel and corten steel, plastics, rubber, wood, and glass, without limitation.

However, these known laminated tiles do not withstand temperature and humidity fluctuations. It has shown that laminated tiles, for example if manufactured from natural or ceramic material on a concrete basis, suffer from fracture and deterioration when used outdoors. On the other hand, it is hard to build a flat terrace with a sufficient stable base layer so as to prevent the solid tile bodies from breaking. As a consequence, for outdoor use these known laminated tiles are not available on the market in a large scale.

As a consequence, there is a need for an improved manufacturing method for laminated tiles, more in particular laminated tiles that are comprised of a ceramic upper layer and a concrete body.

The invention therefore aims at providing a manufacturing method for a laminated tile, also referred to as sandwich tile, comprised of a solid tile body and a concrete body. The concrete body is positioned on a base layer, usually sand, and thus is not visible whereas the solid tile body is exposed and thus is visible when in use.

It is clear to a man skilled in the art that a method for manufacturing a laminated tile is completely different from a tiling operation for, for example, creating a terrace. According to the present invention, the term "laminated tile" or "sandwich tile" relates to the product obtained with the method according to the present invention, whereas the term "solid tile body" relates to the "ceramic tile", "natural stone tile", "metal tile" or the like, as mentioned in claim 17, that forms the visible part of the "laminated tile" according to the present invention.

The invention especially aims at providing a laminated tile that has optimum adhesion strength between solid tile body and concrete body.

The invention also aims at providing an improved laminated tile, obtained from a solid tile body and a concrete body.

More in particular, the present invention aims at providing a method for manufacturing a solid tile body that has excellent adhesive strength between solid tile body and concrete body.

So as to obtain at least one of the goals mentioned above, the present invention provides a method comprising the steps of claim 1. This manufacturing method has the advantage that a laminated tile provides excellent adhesion strength between the solid tile body and the concrete body.

Hereafter, reference will be mainly made to "ceramic tile" whereas any solid tile body is meant as well in those cases. The invention is therefore not limited to a laminated tile comprising a ceramic tile but to any laminated tile comprising a solid tile body at a visible side and a concrete body.

According to a first aspect, the invention therefore relates to a method for manufacturing a laminated tile comprising a mutually connected solid tile body and concrete body, said method comprising the steps of:
a) applying a primer to a first surface of said solid tile body, wherein said primer comprises monomers that form part of a foaming polymerization system,
b) applying a concrete mixture on top of said solid tile body's first surface,
c) hardening said concrete mixture and said primer at least partially for obtaining a green laminated product,
d) optionally fully hardening said concrete and said primer for obtaining said laminated tile if said full hardening was not obtained in step c). The application of a primer that uses a foaming polymerization system, which most preferably is a polymerization system that comprises water for polymerization of the monomers, yields a good adhesion of the solid tile body and the concrete mixture. This probably is obtained due to the foam adapting to the concrete's shape. A very efficient polymerization system yields polyurethane foam as an adhesive for the concrete mixture and the solid tile body. Hence, to that end the primer will comprise di-isocyanate monomers.

The use of a water polymerization system has additional advantage, since water that is present in the concrete mixture that is added to the primer coated solid tile body provides in foaming of said adhesive upon polymerization. Since water is transported rather slowly from the concrete mixture into the boundary layer of the solid tile body and the concrete mixture, the concrete will settle (i.e. harden out or cure) during the polymerization of the primer. Any shrink of the concrete due to its hardening, whereas the solid tile body will not shrink, is equalized by the simultaneous polymerization (and hardening) of the primer's monomers, which may also introduce some shrink to the adhesive. Furthermore, during polymerization the adhesive is not completely hardened and therefore will adapt to the shape and size of the concrete on the one hand and the shape and size of the solid tile body on the other hand. Such yields a bonding that virtually is stress free. In addition to this, a concrete with an open structure provides additional advantage in connection of the adhesive according to the present invention to the concrete body.

It is further preferred that the method comprises a step of positioning said solid tile body in a mold, exposing a first surface before step a), or between step a) and step b); and an additional step of removing said product from the mold after step c), or after step d). Such substantially eases the manufacturing of a well-defined laminated tile since the size and shape of the concrete body may be made consistent with the solid tile body's shape and size.

In the method according to the present invention, using a polymerization system that works on a water basis, it is preferred for the method to comprise the step of applying a concrete mixture with an open structure, yielding a porous concrete body. The porous concrete body thus has an open-cell structure. The open-cell structure of the concrete body allows water to migrate through the base layer of the laminated tile, reaching the primer, or adhesive, at the boundary layer between the concrete body and the solid tile body. Such ensures an ongoing polymerization, and thus hardening, of the monomers providing the adhesive obtaining an optimum strength, even if the concrete itself is not able to provide sufficient water for the polymerization of the monomers.

Preferably, the method according to the invention comprises the step of compacting said concrete mixture after applying same to the mold. It has shown that a method comprising the step of compacting said concrete after applying same to the mold increases the structural integrity of the laminated tile according to the invention. However, it has unexpectedly shown that the adherence of the concrete and the solid tile body is improved as well by this method step.

A highly preferred method is comprised of the steps of densifying said concrete mixture before same is hardened, applying a pressure of at least 2 bar, preferably at least 2.5 bar, and maximally 8 bar, preferably in combination with a vibration movement of said concrete. Preferably, said step of densifying the concrete mixture is as short as possible while obtaining a maximally densified mixture, for example only a few seconds. However, when applying the pressure as mentioned above, said step is preferably performed for maximally 30 seconds, preferably maximally 20 seconds, more preferably maximally 10 seconds. This produces a highly stable and durable laminated tile.

More preferably, the step of compacting said concrete mixture is obtained by performing a kneading movement of said concrete mixture, preferably for at least 5 seconds, more preferably at least 20 seconds, still more preferably at least 30 seconds, and preferably not more than 60 seconds, with the proviso that a concrete mixture's open structure is preserved.

According to the present invention, the primer comprises a polymerization system of at least one polymerizable di-isocyanate monomer for obtaining a polyurethane polymer.

More in particular, said primer preferably comprises diphenylmethane-4,4'-di-isocyanate as active ingredient, and optionally additives as known in the art of polymerization.

The amount of primer coated onto the surface of the solid tile body is preferably between 150 and 180 g/m2. Preferably, a waiting period of at least 2 minutes is adhered to before adding the concrete mixture to said coated surface. Such waiting period seems to aid in a god adhesion between the primer and the solid tile body.

So as to slow down or even delay the polymerization reaction, it is preferred that said primer comprises a water scavenger in an amount of maximally 5 wt.%, preferably maximally 1.5 wt.%, for example p-toluene sulphonyl isocyanate. Adding a water scavenger allows one to coat a surface of the solid tile body with said primer without said monomers starting to react. The scavenger will bind any water from the air. Only after adding the concrete mixture sufficient water will be added allowing the polymerization to start.

As known in the art, the concrete mixture may comprise cement as hydraulic binder and at least one of sand, granulate and blast furnace slag flour as an aggregate. As a preferred embodiment said concrete comprises a combination of at least two of said aggregates, more preferably three of these aggregates, and most preferably all of these aggregates.

In the method, said sand has an average particle dimension of maximally 4 mm, and said granulate has an average particle dimension of between 2 and 8 mm. Said cement has an average particle size as commonly used. The blast furnace slag flour may be used as a complete or partly substitute for said cement and may have the same dimension as cement. Use of blast furnace slag flour as a full or partial substitute for cement (preferably about 25 - 50%, more preferably about 33% slag flour) has as advantage that curing (or hardening) of the concrete mixture is substantially slower than when using cement only (for example Portland cement). Dimensions of the aggregates may be as is common in the art. This counts both for a case where only one or a limited number of aggregates is used and in the case where all four aggregates are used.

According to a further preferred embodiment, in the method according to the invention, said concrete mixture comprises:
- cement in an amount of between 4 and 12%, preferably between 6 and 10%;
- sand in an amount of between 15 and 30%, preferably between 20 and 25%;
- granulate in an amount of between 55 and 75%, preferably between 62 and 69%; and
- blast furnace slag flour in an amount of between 2 and 6%, preferably between 3 and 5%; all % calculated on weight basis;
with the proviso that the mixture has an open structure, yielding a porous concrete body.

It is especially preferred that the method according to the present invention comprises the step of applying a non-liquid concrete mixture in step c). A non-liquid concrete mixture provides the advantage that it retains its open structure after being fed onto the solid tile body, such that, after hardening thereof, a porous concrete body is obtained. For example, said concrete may be added so as to obtain a concrete layer of between 1 and 15 cm, preferably between 3 and 8 cm.

According to a further aspect, the present invention also relates to a laminated tile, comprising a mutually connected solid tile body and a concrete body, said solid tile body and concrete body being connected through an adhesive, said adhesive being the polymerization product of monomers that form part of a foaming polymerization system, preferably a water polymerizable polymerization system. The advantages as mentioned above with respect to the preferred embodiments of the method apply in a corresponding manner to the laminated tile according to the present invention.

In particular, preference is given to a laminated tile wherein said adhesive comprises a polyurethane polymer.

Still more preferably, said adhesive provides an elastic bonding.

Still more preferably, the laminated tile according to the invention, and obtained according to the method according to the invention, comprises a spacer at a side wall of said concrete body extending outside a circumference of said ceramic tile. Thus, adjacent tiles are positioned with some mutual distance with the consequence that rain water may dissipate through adjacent tiles. Also, water is easily migrated into the porous concrete body, guaranteeing a thorough and complete polymerization of the primer's monomers. As a matter of fact, the space between adjacent tiles may be filled with sand or another filler as known in the art.

In the present invention, the laminated tile may comprise a solid tile body chosen from ceramics, natural stone, metal such as zinc, aluminum, stainless steel and corten steel, plastics, rubber, wood, and glass. Especially when using a polyurethane primer system, i.e. a primer that yields polyurethane upon polymerization, excellent adhesion between said solid tile body and concrete is obtained, especially if the concrete is added as a non-hardened non-liquid mixture and the said tile was coated with said non-polymerized primer.

Finally, the invention relates to the use of a primer comprising monomers that form part of a water polymerizable polymerization system as an adhesive for laminating a solid tile body and a concrete mixture.

It has unexpectedly shown that the laminated tile according to the present invention, after the concrete and the adhesive have completely set, is substantially completely resistant to moisture and temperature fluctuations. It is even more surprising that according to the present inventive method the adhesive strength even may be further improved by subjecting the laminated tile to moisture. The adhesive bonding between the concrete and the solid tile body has a higher strength than the concrete itself.

So as to ensure that any concrete mixture does not enter any gaps between the solid tile body and the mold's side walls, which might pollute the solid tile body's top surface, it is preferred that the method comprises the step of applying a non-liquid concrete mixture. The term "non-liquid" means that the concrete mixture has such a consistency that within the time required for setting or hardening out, it does not substantially change its shape without active outside interference. Such behavior is also known by the term "non-flowing characteristics". A man skilled in the art of concrete technology is easily able to determine what concrete mixture fulfills such requirement. Surprisingly, it has shown that applying such non-liquid mixture provides a sufficient bonding between the concrete body and the solid tile body. It was expected that an optimum bonding could only be obtained by applying a liquid mixture so as to obtain a maximum wetting of the solid tile body's surface. It was even more surprising that the non-liquid mixture yields a remarkable, even sensational, ability to withstand temperature fluctuations and winter conditions. Applying a concrete mixture with an open character improves these characteristics even further.

The solid tile body should closely fit inside said mold. As a matter of fact, the side walls of said mold may be provided with a compressible material so as to ensure that said solid tile body is closely sealed at all edges, but a close fitting of side walls of the mold may provide good results as well. In such case, the mold may be comprised of a rigid, dimensionally stable material. Since the concrete material that is used for manufacturing the concrete body has a course structure, it will not enter any space between the solid tile's body and the mold sidewalls if such space is substantially smaller than 0.5 mm, preferably smaller than 0.4 mm. A non-flowing concrete material as used in the present invention has as a characteristic that it does not penetrate spaces smaller than 0.5 mm. Also, since the concrete material according to the present invention has an open structure, not all interstices between the course granulate material in the concrete material is filled with finely divided material, like cement and slag flour (for example blast furnace slag flour which is a substitute for cement providing a slow hardening or curing) or other kinds of cement or cement substitute.

Preferably, the laminated tile's side walls are at least at part of their circumference somewhat wider than the dimension of the solid tile body. This ensures that the concrete body of the laminated tile protrudes at least partly beyond the side edges of the solid tile body. Preferably, the concrete body protrudes at least partly beyond all edges of said solid tile body. Such yields a laminated tile that can be easily laid side by side without damaging the ceramic layer. The concrete bodies of adjacent tiles contact each other at said protruding portion, whereas the solid tile bodies are spaced apart. This also provides room for a pointing mortar or the like between adjacent tiles.

Said protrusions may preferably be comprised of spacers at at least one side wall of a concrete body, preferably at at least two or even three side walls, more preferably at all side walls of said concrete body. Although a single protrusion, also identified as spacer, may be applied, it is preferred that at least two spacers are provided since such eases laying the tiles. Therefore it is preferred that each tile is provided with spacers at at least two portions of each side wall of a concrete body. As a consequence, it is preferred that the mold is embodied for providing spacers at the side edges of the concrete body. To this end, the mold may comprise at least one, preferably at least two, cavities at its side walls.

Hence, the invention also relates to a laminated tile obtained according to the method of the present invention, comprising a spacer at a side wall of said concrete body extending outside a circumference of said solid tile body. In addition to the fact that an attractive appearance is obtained since all laminated tiles, more in particular the visible solid tile bodies, are spaced equally, an optimum water drainage is obtained. A spacer protruding maximally 5 mm is sufficient, whereas a maximum of 3.5 mm or even 2.5 mm yields excellent results, both in water drainage and appearance.
Fig. 1 shows a simplified perspective view of a tile according to the invention,
Fig. 2 shows a simplified mold for manufacturing a tile according to the invention.

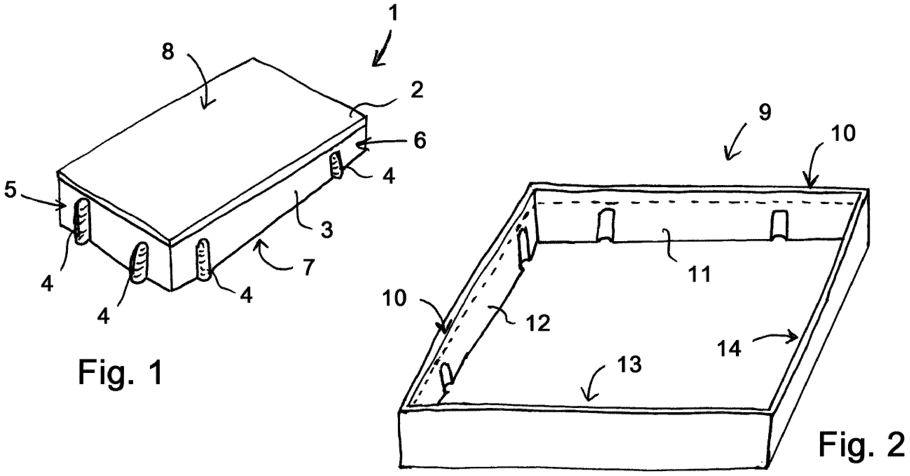

Fig. 1 shows a laminated tile 1 according to the invention, comprised of a solid tile body 2, in this case an exemplary ceramic tile 2, and a concrete body 3. The concrete body 3 comprises spacers 4. The spacers 4 consist in the embodiment shown in the figure, of protrusions at side walls 5, 6 of said laminated tile. In the embodiment of Fig. 1, the spacers 4 end at some distance from the ceramic tile 2, which means that the spacers do not extend until the ceramic tile 2. However, according to an alternative embodiment, the laminated tile 1 according to the invention may be embodied such that the spacers 4 do extend until the ceramic tile 2. Furthermore, the spacers 4 extend to the bottom 7 of the tile 1, whereas the spacers may extend over part of the side walls 5, 6 only, i.e. not extending to said bottom 7. When in use, the ceramic tile 2 is positioned at the laminated tile's top side 8.

A mold 9 for manufacturing a tile 1 according to the invention is shown in Fig. 2. As a matter of fact, said mold 9 is shown in an upside down fashion. When manufacturing a laminated tile 1, said mold 9 is positioned with its bottom side 10 on a flat, optionally compressible, surface after which a ceramic tile 2 is positioned within the mold 9, its side walls preferably close to the side edges 11, 12, 13, 14 of said mold 9. Then, a concrete mixture is poured into said mold 9 and allowed to set sufficiently for removing said tile 1 from the mold 9 without damaging same. Then, the tile 1 is removed from the mold 9 and allowed to fully set.

The invention is not limited to the embodiment described above. The invention is limited only by the appending claims.

The invention also comprises every combination of features that are mentioned here independently from each other.

## Claims

1. A method for manufacturing a laminated tile comprising a mutually connected solid tile body and concrete body, said method comprising the steps of:
a) applying a primer to a first surface of said solid tile body, wherein said primer comprises monomers that form part of a water polymerizable polymerization system,
b) applying a concrete mixture on top of said tile's first surface,
c) hardening said concrete mixture and said primer at least partially for obtaining a green laminated product,
d) optionally fully hardening said concrete and said primer for obtaining said laminated tile if said full hardening was not obtained in step c).

2. A method according to claim 1, comprising a step of positioning said solid tile body in a mold, exposing a first surface before step a) or between step a) and step b); and an additional step of removing said product from the mold after step c) or after step d).

3. A method according to claim 1, comprising the step of applying a concrete mixture with an open structure, yielding a porous concrete body.

4. A method according to claim 1, 2 or 3, comprising the step of compacting said concrete mixture after applying same to the mold.

5. A method according to claim 1, comprising the step of compacting said concrete mixture in combination with a kneading movement of said concrete mixture, for at least 5 seconds, preferably at least 20 seconds, more preferably at least 30 seconds, and preferably not more than 60 seconds, with the proviso that a concrete mixture's open structure is preserved.

6. A method according to claim 1, wherein said primer comprises a polymerization system of at least one polymerizable di-isocyanate monomer for obtaining a polyurethane polymer.

7. A method according to claim 6, wherein said primer comprises diphenylmethane-4,4'-di-isocyanate as active ingredient, and optionally additives.

8. A method according to claim 1, wherein said primer comprises a water scavenger in an amount of maximally 5 wt.%, preferably maximally 1.5 wt.%, for example p-toluene sulphonyl isocyanate.

9. A method according to any of the preceding claims, wherein said concrete mixture comprises cement as hydraulic binder and at least one of sand, granulate and blast furnace slag as an aggregate.

10. A method according to claim 9, wherein said sand has an average particle dimension of maximally 4 mm, and said granulate or said blast furnace slag has an average particle dimension of between 2 and 8 mm.

11. A method according to claim 9 or 10, wherein said concrete mixture:
- comprises said cement in an amount of between 4 and 12%, preferably between 6 and 10%;
- comprises sand in an amount of between 15 and 30%, preferably between 20 and 25%;
- comprises said granulate in an amount of between 55 and 75%, preferably between 62 and 69%; and
- comprises said blast furnace slag flour in an amount of between 2 and 6%, preferably between 3 and 5%; all % calculated on weight basis;
with the proviso that the mixture has an open structure, yielding a porous concrete body.

12. A method according to any of the preceding claims, comprising the step of applying a non-liquid concrete mixture in step c).

13. A laminated tile, comprising a mutually connected solid tile body and a concrete body, said solid tile body and concrete body being connected through an adhesive, said adhesive being the polymerization product of monomers that form part of a water polymerizable polymerization system.

14. A laminated tile according to claim 13, wherein said adhesive comprises a polyurethane polymer.

15. A laminated tile according to claim 13 or 14, said adhesive providing an elastic bonding.

16. A laminated tile according to claim 13 - 15, obtained according to a method of any of claims 1-12, comprising a spacer at a side wall of said concrete body extending outside a circumference of said solid tile body.

17. A laminated tile according to claim 13, comprising a solid tile body chosen from ceramics, natural stone, metal such as zinc, aluminum, stainless steel and corten steel, plastics, rubber, wood, and glass.

18. Use of a primer comprising monomers that form part of a water polymerizable polymerization system as an adhesive for laminating a solid tile body and a concrete mixture.
